# EUROPÄISCHE PATENTSCHRIFT

(11) **EP 4 171 992 B1**
(45) Veröffentlichungstag und Bekanntmachung des Hinweises auf die Patenterteilung: **10.06.2026**
(21) Anmeldenummer: 21739449.3
(22) Anmeldetag: 30.06.2021
(51) Int. Cl.: B60M 1/20, B60M 1/30

(54) **VORRICHTUNG ZUM TRAGEN EINES FAHRDRAHTES**
DEVICE FOR SUPPORTING A TROLLEY WIRE
DISPOSITIF DE SUPPORT D'UN FIL CONDUCTEUR

(30) Priorität: 30.06.2020 DE 102020117162
(43) Veröffentlichungstag der Anmeldung: 03.05.2023
(73) Patentinhaber: Furrer + Frey AG, 3000 Bern 6 (CH)
(72) Erfinder: FURRER, Beat, 3012 Bern (CH); CASALI, Bruno, 3125 Toffen (CH)
(74) Vertreter: von Bülow & Tamada
(86) Internationale Anmeldenummer: PCT/IB2021/055867
(87) Internationale Veröffentlichungsnummer: WO 2022/003593

(56) Entgegenhaltungen:
- EP-A2- 0 262 607
- EP-B1- 2 485 917
- WO-A1-2019/097325
- KR-A- 20130 073 268
- KR-B1- 100 739 328

## Beschreibung

Die vorliegende Erfindung betrifft eine Vorrichtung zum Tragen eines Fahrdrahtes.

Aus der JPH07009896A ist eine Vorrichtung zum Tragen eines in einer Längsrichtung verlaufenden Fahrdrahtes zur elektrischen Energieversorgung eines Schienenfahrzeuges an einem in einer rechtwinklig zur Längsrichtung verlaufenden Höhenrichtung gesehen oberhalb des Fahrdrahtes angeordneten Tragkörper bekannt, umfassend eine thermische Expansionsbewegung wenigstens des Fahrdrahtes führende Führungsschiene mit einem ersten Schienenkörper, an dem der Fahrdraht ortsfest gehalten ist und einem zweiten Schienenkörper, der am Tragkörper ortsfest gehalten ist. Der erste Schienenkörper ist hierbei im zweiten Schienenkörper gleitend gehalten.

Die Druckschrift EP 0 262 607 A2 offenbart eine Vorrichtung gemäß dem Oberbegriff des Anspruchs 1.

Es ist Aufgabe der Erfindung, die bekannte Vorrichtung zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung, umfasst eine Vorrichtung zum Tragen eines in einer Längsrichtung verlaufenden Fahrdrahtes zur elektrischen Energieversorgung eines Schienenfahrzeuges an einem in einer rechtwinklig zur Längsrichtung verlaufenden Höhenrichtung gesehen oberhalb des Fahrdrahtes angeordneten Tragkörper, umfassend eine thermische Expansionsbewegung wenigstens des Fahrdrahtes führende Führungsschiene mit einem ersten Schienenkörper, an dem der Fahrdraht ortsfest gehalten ist und einem zweiten Schienenkörper, der am Tragkörper ortsfest gehalten ist, wobei der erste Schienenkörper und der zweite Schienenkörper gegeneinander über Wälzelemente geführt sind.

Obwohl der Einsatz von Wälzelementen in der angegebenen Vorrichtung zunächst widersinnig erscheint, weil Wälzlager bekanntermaßen anfälliger gegen Verschmutzung sind, sich weniger auf Stoß durch Pantographen beanspruchen lassen und auch mehr Bauraum vor allem in Tunneln benötigen formen die Wälzelemente sich zwischen den beiden Schienenkörpern einen Spalt. Dieser Spalt schafft im Kontaktbereich zwischen den beiden Schienenkörpern einen Belüftungsraum, der vor allem im Kurzschlussfall die beiden Schienenkörper besser kühlt. Zwischen gleitend gelagerten Schienenkörpern konnten Verkanntungen beobachtet werden, die über kurz oder lang zu einem Ausreissen eines Schienenkörpers aus dem anderen Schienenkörper führten. Durch die Lagerung der Schienenkörper über Wälzelemente konnte das Risiko dieser Verkantungen deutlich reduziert werden, so dass die angegebene Vorrichtung spürbar langlebiger ist.

Erfindungsgemäß sind die Wälzelemente quer zur Längsrichtung und quer zur Höhenrichtung ausgerichtete Rollen. In dieser Ausführung, in der die Wälzelemente in Form von Rollen in der Querrichtung ausgerichtet sind, lässt sich eine besonders stabile Führung der beiden Schienenkörper in der Längsrichtung schaffen.

In einer erfindungsgemäßen Weiterbildung der angegebenen Vorrichtung umfasst einer der Schienenkörper in Längsrichtung gesehenen einen u-profilförmigen Querschnitt mit einem Verbindungsarm und zwei voneinander beabstandete und vom Verbindungsarm abragende Haltearme, an dem die Rollen gehalten sind. Auf diese Weise umgreift einer der Schienenpartner den anderen Schienenpartner und blockiert auf diese Weise wirksam unbeabsichtigte Querbewegungen, die zu störenden mechanischen Beanspruchungen des zu tragenden Fahrdrahtes führen können.

In einer besonderen Weiterbildung der angegebenen Vorrichtung besitzen die Rollen einen Rollendurchmesser und sind in Längsrichtung gesehen mit wenigstens einem, vorzugsweise wenigstens zwei Rollendurchmessern beabstandet voneinander angeordnet. Auf diese Weise können mechanische Belastungen, die durch sich ansammelnde Verschmutzungen in dem zuvor erwähnten Belüftungsraum in die Schienenkörper eingetragen werden, reduziert oder wenn nicht gar vermieden werden.

In einer anderen Weiterbildung der angegebenen Vorrichtung sind die Wälzelemente achsensymmetrisch zur Längsrichtung angeordnet. Auf diese Weise wird ein symmetrischer Belastungszustand erreicht, bei dem alle Rollen in der angegebenen Vorrichtung gleich belastet werden.

In einer noch anderen Weiterbildung der angegebenen Vorrichtung ist erste Schienenkörper oder der zweite Schienenkörper in einem in der Längsrichtung gesehenen Querschnitt die Wälzelemente in Form eines U umgreifend ausgebildet. Auf diese Weise wird selbst dann ein Kontakt zwischen den beiden Schienenkörpern über die Wälzlager sichergestellt, wenn sich die beiden Schienenkörper um die Querachse gegeneinander verdrehen.

In einer zusätzlichen Weiterbildung der angegebenen Vorrichtung besitzt das U in der Höhenrichtung gesehen einen ersten Schenkel und einen dem ersten Schenkel gegenüberliegenden zweiten Schenkel, wobei die Wälzelemente einen Durchmesser zwischen 90% und 99% eines Abstandes der beiden Schenkel besitzt. Auf diese Weise wird ein vergleichsweise kleines Spiel für das zuvor genannte Verdrehen der beiden Schienenkörper um die Querachse eingestellt.

In einer weiteren Weiterbildung umfasst die angegebene Vorrichtung ein am ersten und/oder zweiten Schienenkörper angeordnetes Drehlager zur Drehmomentenentkopplung zwischen dem Fahrdraht und dem Tragkörper. Auf diese Weise lässt sich eine Entkopplung der beiden Schienenkörper bezüglich Drehmomenten um die Höhenachse erreichen, so dass beispielsweise in einer Kurve durch thermische Bewegungen verursachte Verdrehungen des einen Schienenkörpers um die Hochachse nicht auf den zweiten Schienenkörper weitergegeben werden.

In einer besonderen Weiterbildung der angegebenen Vorrichtung umfasst das Drehlager zwei punktsymmetrisch zueinander angeordnete und in der Höhenrichtung durch den ersten oder zweiten Schienenkörper geführte Schlitze, durch die jeweils in der Höhenrichtung ein ortsfest zum Tragkörper gehaltener Haltezapfen mit einem verdickten Ende geführt ist. Auf diese Weise wird der eine Schienenkörper gegen ein Verpendeln um die Längsachse gegenüber dem anderen Schienenkörper stabilisiert.

In einer noch anderen Weiterbildung umfasst die angegebene Vorrichtung ein am ersten und/oder zweiten Schienenkörper angeordnetes und gegen die Höhenrichtung vorgespanntes Rückstellelement zum Dämpfen von in der Höhenrichtung in den Fahrdraht eingetragene Kräfte. Auf diese Weise kann der oben genannten schlechteren Stoßbelastbarkeit entegengewirkt werden.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine perspektivische Ansicht eines Gleisabschnittes mit einer Vorrichtung zum Tragen eines Fahrdrahtes,
Fig. 2 eine perspektivische Ansicht einer zur Fig. 1 ersten alternativen Vorrichtung zum Tragen eines Fahrdrahtes,
Fig. 3 eine Seitenansicht der Vorrichtung aus Fig. 2,
Fig. 4 eine Schnittansicht der Vorrichtung aus Fig. 2,
Fig. 5 eine perspektivische Ansicht eines ersten Teils einer zur Fig. 1 zweiten alternativen Vorrichtung zum Tragen eines Fahrdrahtes,
Fig. 6 eine perspektivische Ansicht eines zweiten Teils der zur Fig. 1 zweiten alternativen Vorrichtung zum Tragen eines Fahrdrahtes,
Fig. 7a eine Ansicht eines Tragkörpers in der Vorrichtung der Fig. 5 und 6 aus einer ersten Perspektive,
Fig. 7b eine Ansicht eines Tragkörpers in der Vorrichtung der Fig. 5 und 6 aus einer zweiten Perspektive,
Fig. 8a eine Ansicht eines weiteren Tragkörpers in der Vorrichtung der Fig. 5 und 6 aus einer ersten Perspektive, und
Fig. 8b eine Ansicht eines noch weiteren Tragkörpers in der Vorrichtung der Fig. 5 und 6 aus einer zweiten Perspektive.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

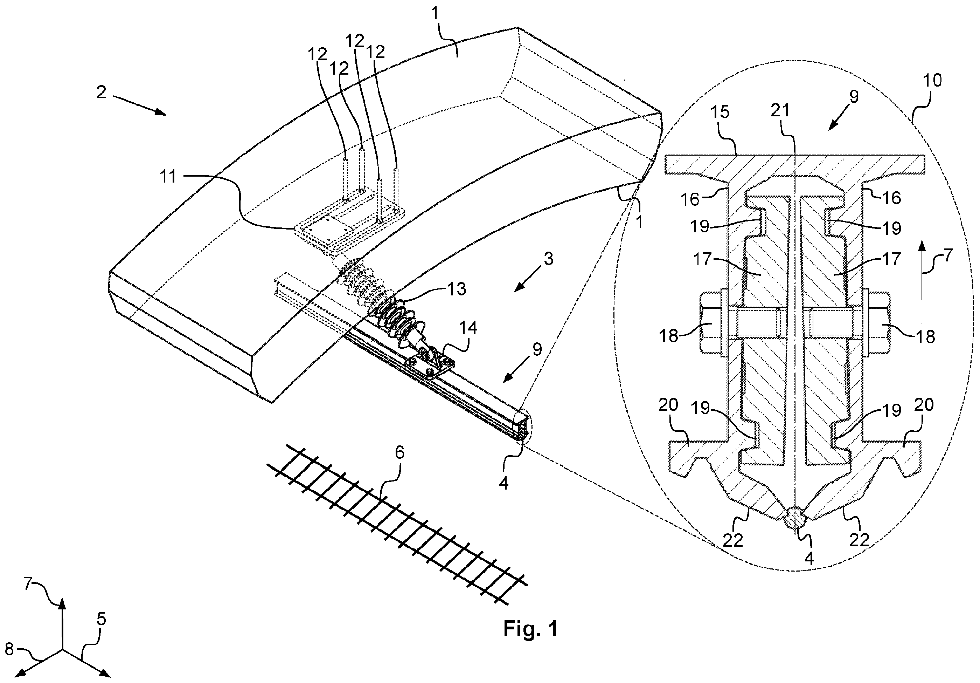

Es wird auf Fig. 1 Bezug genommen, die eine schematische Ansicht eines mit einer Decke 1 überdeckten Gleisabschnittes 2 mit einer Vorrichtung 3 zum Tragen eines elektrischen Strom führenden Fahrdrahtes 4 und elektrischen Isolieren des Fahrdrahtes 4 gegenüber der Decke 1 als Stützbau aus einer Perspektive zeigt. Der überdeckte Gleisabschnitt 2, wie er in Fig. 1 angedeutet ist, kann beispielsweise in einem Tunnel, einer Unterführung oder einem überdachten Bahnhof ausgeführt sein.

In dem Gleisabschnitt 2 erstreckt sich in einer Fahrtrichtung 5 ein Gleis 6, auf dem sich ein nicht weiter gezeigtes elektrisches Schienenfahrzeug geführt bewegen kann. Dabei ist der Fahrdraht 4 in einer Höhenrichtung 7 gesehen über dem Gleis 6 angeordnet, damit das Schienenfahrzeug in an sich bekannter Weise Strom entnehmen kann. Gemeinsam mit meiner sich quer zur Fahrrichtung 5 und quer zur Höhenrichtung 7 erstreckenden Querrichtung 8 spannen die Fahrtrichtung 5 und die Höhenrichtung 7 den Raum des Gleisabschnittes 2 auf, in dem sich das Schienenfahrzeug auf dem Gleis 6 bewegen kann.

Der Fahrdraht 4 ist in einer Deckenstromschiene 9 gehalten, die Teil der Vorrichtung 3 ist. Bevor kurz auf den Aufbau der Deckenstromschiene 9 anhand einer vergrößerten Profilansicht 10 eingegangen wird, soll zuvor kurz erläutert werden, wie der Fahrdraht 4 über dem Gleis 6 an der Decke 1 getragen ist.

An der Decke 1 ist eine erste Trägerplatte 11 mittels Verankerungsmitteln 12, wie Schrauben oder Schwerlastankern gehalten. An der ersten Trägerplatte 11 ist ein Langstabisolator 13 gehalten, der zur Decke 1 in einem nicht weiter referenzierten Winkel geneigt ist. An der ersten Trägerplatte 11 gegenüberliegenden Ende des Langstabisolators 13 ist eine zweite Trägerplatte 14 befestigt, an der wiederum die Deckenstromschiene 9 gehalten ist.

Der Fahrdraht 4 kann sich in der Fahrtrichtung 5 in seiner Länge aufgrund von Umwelteinflüssen, wie Temperaturwechsel, ändern. Um hierdurch bedingte mechanische Spannungen zu vermeiden, ist entweder die erste Trägerplatte 11 gegenüber der Decke 1 in der Fahrtrichtung 5 geführt oder die Deckenstromschiene 9 gegenüber der zweiten Trägerplatte 14 in der Fahrtrichtung 5 gelagert.

Zum Schutz der Führungspartner vor Verunreinigungen, für eine hohe Belastbarkeit der Führungspartner gegenüber Stoßbelastungen beim Passieren eines Panthographen und für einen möglichst geringen Bauraum vor allem in Tunneln sollte die Führung als Gleitführung ausgebildet sein. In Fig. 1 könnte daher entweder die erste Trägerplatte 11 gleitfähig gegenüber der Decke 1 oder die Deckenstromschiene gleitfähig gegenüber der zweiten Trägerplatte 14 gehalten sein.

In einer Vorrichtung 3, in der der elektrische Strom führende Fahrdraht 4 über Gleitlager aufgehängt ist, lassen sich jedoch gehäuft Ausfallerscheinungen derart beobachten, dass die Gleitführungspartner verkannten und sich gegenseitig zerstören. Im schlimmsten Fall kann die gesamte Vorrichtung 3 versagen und der Fahrdraht 4 von der Decke 1 fallen, was insbesondere im Einsatz für Hochgeschwindigkeitsverkehr verheerende Folgen nach sich ziehen kann.

Vor der Vorstellung eines Lösungsvorschlages zur Reduktion oder Vermeidung der Ausfälle, soll zunächst anhand der vergrößerten Profilansicht 10 auf den Aufbau der Deckenstromschiene 9 kurz eingegangen werden.

Die Deckenstromschiene 9 weist in der Höhenrichtung 7 gesehen an der Oberseite einen Querarm 15 auf, dem rechtwinklig und entgegen der Höhenrichtung 7 zwei beabstandete Spannarme 16 abragen. Die Deckenstromschiene 9 ist in der Fahrtrichtung 5 gesehen mehrteilig ausgebildet, wobei die einzelnen Teile über Stoßlaschen 17 mechanisch und elektrisch miteinander verbunden sind, die über Stoßlaschenschrauben 18 an der Deckenstromschiene 9 gehalten werden. Zur lagesicheren Montage können Feder/Nut-Verbindungen 19 vorgesehen sein. An einer dem Querarm 15 gegenüberliegenden Seite weist jeder Spannarm 16 eine Fahrstraße 20 für ein nicht weiter gezeigtes Montagefahrzeug auf, die jeweils von einer Mittellinie 21 der Deckenstromschiene 3 weggerichtet sind. Von einer in der Höhenrichtung 7 gesehenen Unterseite jeder Fahrstraße 20 erstreckt sich je ein Klemmarm 22 auf die Mittellinie 21 zu. Zwischen den beiden Klemmarmen 22 ist der Fahrdraht 4 eingeklemmt. Der Aufbau der Deckenstromschiene 9 ist an sich beispielsweise aus der
DE 20 2004 009 420 U1 bekannt und soll nachstehend nicht weiter erläutert werden.

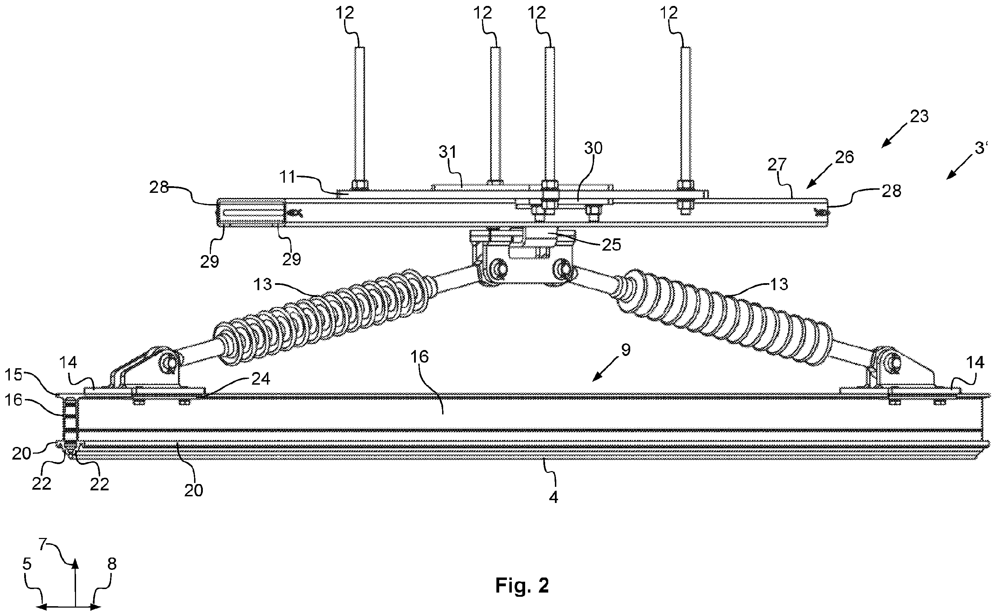

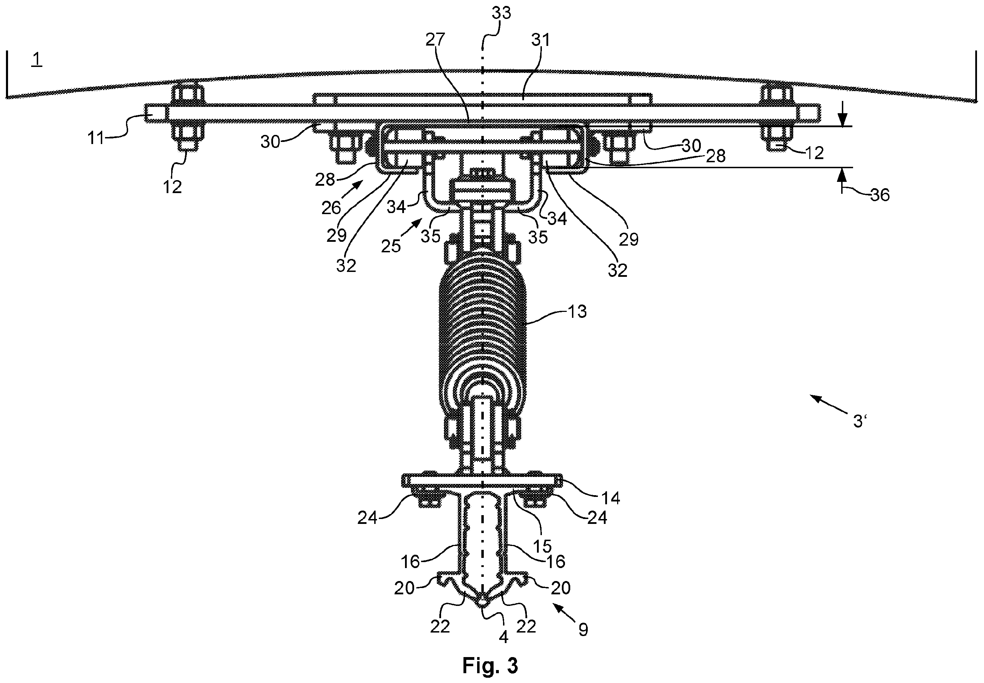

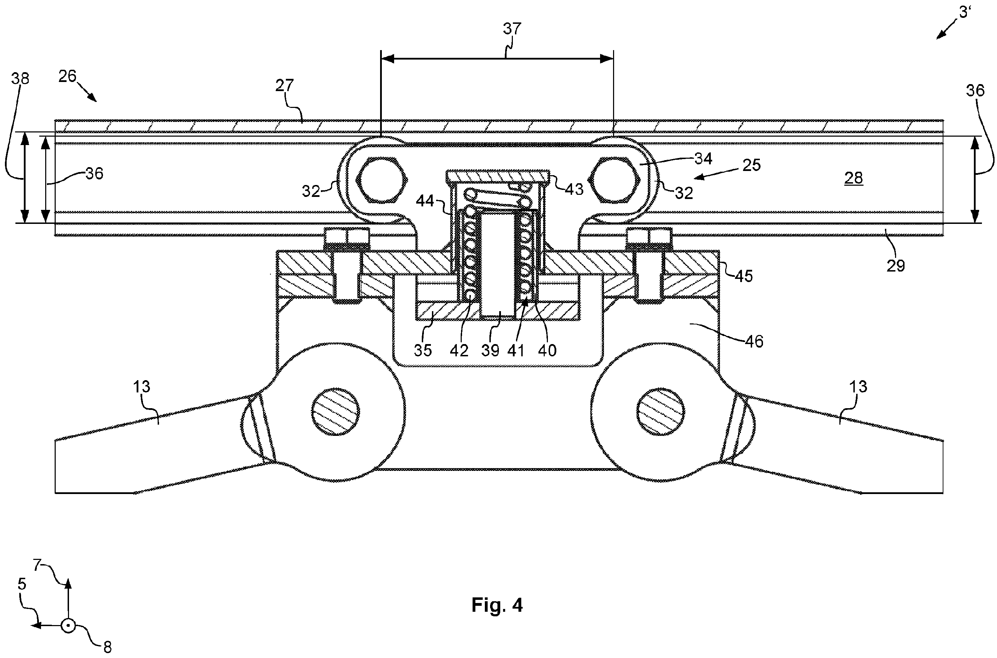

Zur Reduktion oder Vermeidung der zuvor erläuterten Ausfälle der Vorrichtung 3 wird die Gleitführung durch eine Wälzführung ersetzt. Diese Idee wird nachstehend anhand der Figuren 2 bis 4 erläutert, die eine alternative Vorrichtung 3' zum Tragen des elektrischen Strom führenden Fahrdrahtes 4 und elektrischen Isolieren des Fahrdrahtes 4 gegenüber der Decke 1 als Stützbau aus einer Perspektive zeigt. In der alternativen Vorrichtung 3' ist die Stromschiene 9 über zwei Langstabisolatoren 13 gehalten, wobei die beiden Langstabisolatoren 13 über eine Führungsschiene 23 an der ersten Trägerplatte 11 befestigt sind. Gegenüberliegend zur ersten Trägerplatte 11 ist die Stromschiene 9 an den Langstabisolatoren 13 über je eine zweite Trägerplatte 14 befestigt. Hierzu sind an eine in der Höhenrichtung 7 gesehenen Unterseite jeder zweiten Trägerplatte 14 Klemmwinkel 24 angeschraubt, wobei der Querarm 15 der Stromschiene 9 zwischen der jeweiligen zweiten Trägerplatte 14 und den Klemmwinkeln 24 gehalten ist.

Die Führungsschiene 23 umfasst einen ersten Schienenkörper 25, an der der Fahrdraht 4 ortsfest gehalten ist und einen zweiten Schienenkörper 26, der an der ersten Trägerplatte 11 als Tragkörper ortsfest gehalten ist.

Der zweite Schienenkörper 26 besitzt in einem Querschnitt in der Fahrtrichtung 5 gesehenen ein U-Profil mit einem sich in der Querrichtung 8 erstreckenden Verbindungsarm 27, von dem sich zwei voneinander beabstandete Haltearme 28 entgegen der Höhenrichtung 7 erstrecken. Gegenüberliegend zum Verbindungsarm 27 erstrecken sich am anderen Ende der Verbindungsarme 27 in der Querrichtung 8 aufeinander je ein Stützarm 29 und formen das U-Profil zu einem C-Profil. Der Verbindungsarm 27 ist an der ersten Trägerplatte 11 über Klammerelemente 30 gehalten, die über eine Gegenplatte 31 an der ersten Trägerplatte 11 angeschraubt sind.

Auf den Stützarmen 29 liegen Wälzelemente 32 in Form von Rollen auf, die quer zur Höhenrichtung 7 ausgerichtetet sind. Weil der zweite Schienenkörper 26 ein C-Profil besitzt, umgreift er die Wälzelemente 32 im Querschnitt in der Fahrtrichtung 5 gesehen u-förmig. Die Wälzelemente 32 sind zu einer in der Höhenrichtung 7 verlaufenden Symmetrielinie 33 achsensymmetrisch angeordnet und an sich in der Höhenrichtung 7 erstreckenden Haltewänden 34 des ersten Schienenkörpers 25 gehalten. Die Haltewände 34 sind über eine sich in der Querrichtung 8 erstreckende Verbindungswand 35 miteinander verbunden, wobei auf der Verbindungswand 35 in einer noch zu beschreibenden Weise die Langstabisolatoren 13 getragen sind.

Die Wälzelemente 32 hier in Form der Rollen besitzen einen gemeinsamen Rollendurchmesser 36 und sollten in Fahrtrichtung 5 gesehen mit einem Rollenabstand 37 angeordnet sein, der wenigstens einen, vorzugsweise wenigstens zwei Rollendurchmesser 36 beträgt. In der vorliegenden Ausführung ist der Rollenabstand 37 2,8 mal so groß gewählt, wie der Rollendurchmesser 36. Darüberhinaus sollte der Rollendurchmesser 36 zwischen 90% und 99% eines Abstandes 38 zwischen dem Verbindungsarm 27 und den Verbindungswänden 35 des ersten Schienenkörpers 25 gewählt sein. In der vorliegenden Ausführung weist der Rollendurchmesser 36 95% des Abstandes 38 auf. Dreht sich der erste Schienenkörper 25 um die Querachse 8, so setzen die Wälzelemente 32 auf den Verbindungsarm 27 auf, so dass die Funktion der Führungsschiene 23 weiterhin sichergestellt ist.

Auf der Verbindungswand 35 ist ein Führungszapfen 39 befestigt, der sich in der Höhenrichtung 7 erstreckt. Um den Führungszapfen 39 herum ist eine erste Führungshülse 40 gelegt, so dass zwischen dem Führungszapfen 39 und der ersten Führungshülse 40 ein Radialraum 41 ausgebildet ist. In diesem Radialraum 41 ist ein Rückstellelement 42 hier in Form einer Feder aufgenommen, welches auf die Verbindungswand 35 aufgesetzt und in der Höhenrichtung 7 ausgerichtet ist. Auf das der Verbindungswand 35 gegenüberliegende Ende des Rückstellelemente 42 ist ein Deckelelement 43 aufgesetzt, von dem sich entgegen der Höhenrichtung 7 radial außerhalb der ersten Führungshülse 40 eine zweite Führungshülse 44 erstreckt. Am dem Deckelelement 43 gegenüberliegenden Ende der zweiten Führungshülse 44 ist eine Halteplatte 45 befestigt, an deren in der Höhenrichtung 7 gesehenen Unterseite ein Halter 46 für die Langstabisolatoren 13 angeschraubt ist.

Fährt das Schienenfahrzeug auf dem Gleisabschnitt 2 unter der alternativen Vorrichtung 3' entlang, hebt sein Pantograph bei der Stromabnahme aus dem Fahrdraht 4 die Halteplatte 45 in der Höhenrichtung 7 an. Nach dem Passieren der alternativen Vorrichtung 3' fällt die Halteplatte 45 dann schlagartig gegen die Höhenrichtung 7 zurück, wobei das Rückstellelement 42 den Fall dämpft und verhindert, dass sie hart auf die Verbindungswand 35 aufschlägt.

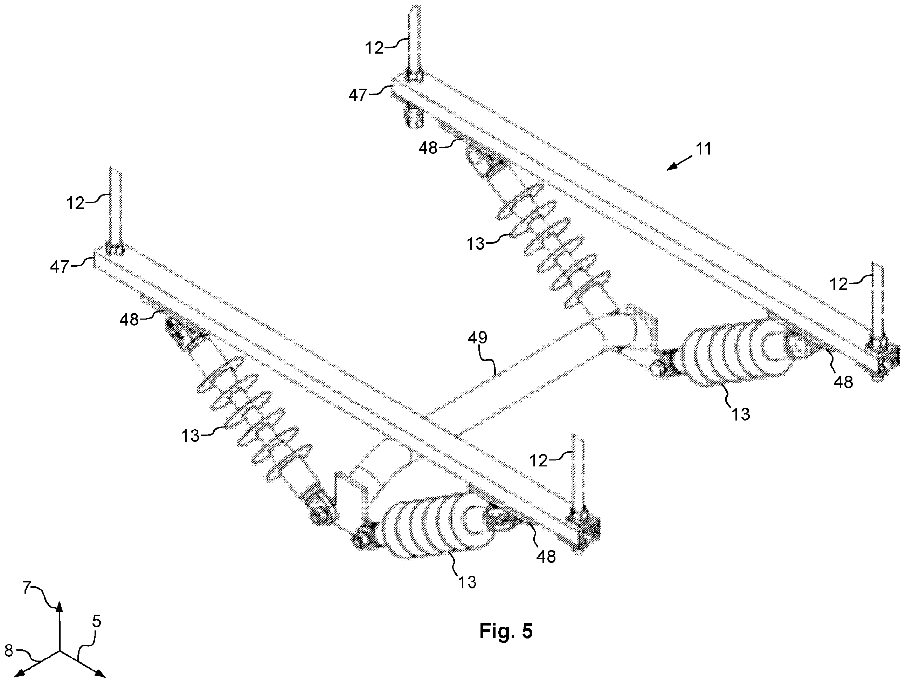

Nachstehend wird nun anhand der Figs. 5 bis 7b eine zweite alternative Vorrichtung 3" zum Tragen des Fahrdrahtes 4 beschrieben.

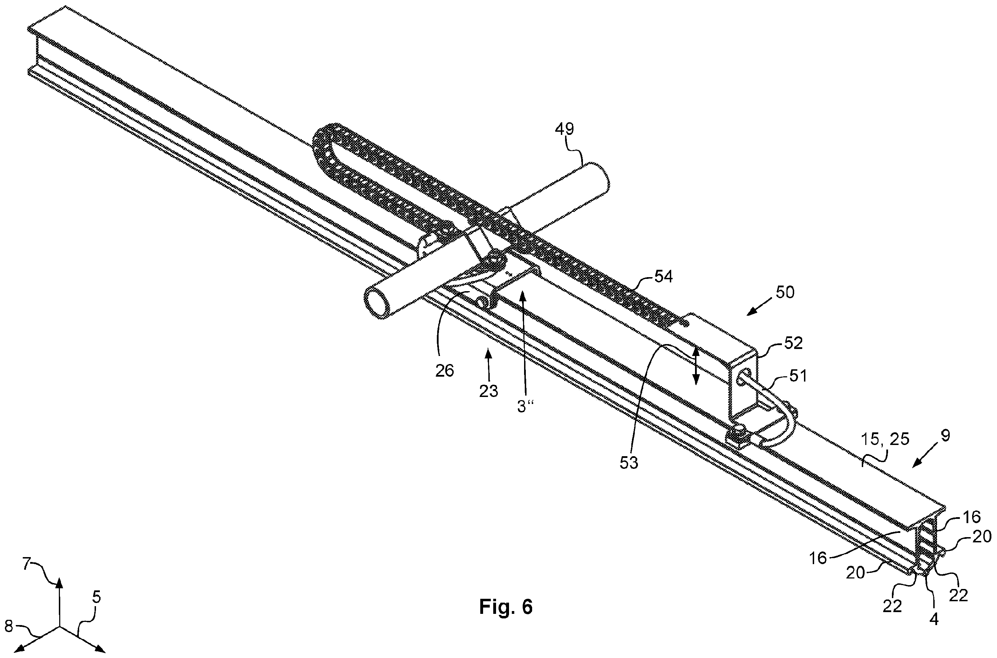

Die zweite alternative Vorrichtung 3" ist über die erste Trägerplatte 11 an der Decke 1 gehalten, die in Fig. 5 mehrteilig ausgeführt ist. Über die Verankerungsmittel 12 sind Haltestreben 47 an der Decke 1 gehalten, wobei auf der in der Höhenrichtung 7 gesehenen Unterseite der Haltestreben 47 vier Gelenkplatten 48 gehalten und bezüglich der Fahrtrichtung 5 achsensymmetrisch angeordnet sind. An jeder Gelenkplatte 48 ist ein Langstabisolator 13 gehalten. An den den Gelenkplatten 48 gegenüberliegenden Enden der Langstabsiolatoren 13 ist eine in der Querrichtung 8 verlaufende Querstange 49 gehalten, an der die in Fig. 6 gezeigte zweite alternative Vorrichtung 3" gehalten ist.

Bevor die zweite alternative Vorrichtung 3" näher beschrieben wird, soll zuvor noch ein elektrischer Überlastschutz 50 erläutert werden, der die zweite alternative Vorrichtung 3" vor Überspannungschäden im Fall von Kurzschlüssen einer der Langstabisolatoren 13 schützen soll. Der elektrische Überlastschutz 50 überbrückt elektrisch die zweite alternative Vorrichtung 3" und führt einen Strompfad 51 mit hoher elektrischer Leitfähigkeit hier in Form eines Kabels 51 von der Stromschiene 9 zur Querstange 49. Das Kabel 51 ist über einen Kabelschuh 52 an den Querarm 15 der Stromschiene 9 angeschlossen. Der Kabelschuh 52 hebt das Kabel 51 in der Höhenrichtung 7 gesehen auf einen Brückenabstand 53 über der Stromschiene 9 und führt es in eine Schleppkette 54. Die Schleppkette 54, auch Energieführungskette genannt, führt das Kabel 51 dann von der zweiten alternativen Vorrichtung 3" aus gesehen in der Höhenrichtung 7 über die Querstange 49 auf eine vom Kabelschuh 52 aus gesehen in der Fahrtrichtung 5 gegenüberliegende Seite, wo es dann an an die zweite alternative Vorrichtung 3" angeschlossen ist.

Die Führungsschiene 23 der zweiten alternativen Vorrichtung 3" umfasst als ersten Schienenkörper 25, an der der Fahrdraht 4 ortsfest gehalten ist, den Querarm 15 der Stromschiene 9. Der zweite Schienenkörper 26 ist hier über die Querstange 49 und die Langstabisolatoren 13 an der ersten Trägerplatte 11 als Tragkörper ortsfest gehalten. In der vorliegenden Ausführung sind die Wälzkörper 32, weiterhin in Form von Rollen, an den Haltearmen 28 des zweiten Schienenkörpers 26 gehalten und ersetzen so die Stützarme 29. Der erste Schienenkörper 25 in Form des Querarms 15 der Stromschiene 9 ist daher in der Höhenrichtung 7 gesehen zwischen den Wälzkörpern 32 und dem Verbindungsarm 27 gehalten, so dass sich die Stromschiene 9 in der Längsrichtung 5 gesehen beweglich gelagert in ihrer Länge temperaturbedingt ausdehnen und zusammenziehen kann.

Zur Befestigung des zweiten Schienenkörpers 26 der zweiten alternativen Vorrichtung 3" an der Querstange 49 ist eine Schelle 55 aus einem ersten Schellenteil 56 und einem zweiten Schellenteil 57 vorgesehen, die beide miteinander verschraubt sind. Das erste Schellenteil 56 ist in der Höhenrichtung 7 gesehen oberhalb der Querstange 49 angeordnet, während das zweite Schellenteil 57 unterhalb der Querstange 49 angeordnet ist, so dass die beiden
Schellenteile 56, 57 die Querstange 49 im zusammengeschraubten Zustand umgreifen und so den zweiten Schienenkörper 26 an der Querstange 49 halten.

Am zweiten Schellenteil 57 sind in der Höhenrichtung 7 gesehen an der Unterseite zwei zur Fahrtrichtung 5 achsensymmetrisch angeordnete Haltezapfen 58 ausgebildet, die durch je einen Rundschlitz 59 im Verbindungsarm 27 des zweiten Schienenkörpers 26 geführt sind. Die beiden Rundschlitze 59 sind zueinander punktsymmetrisch angeordnet. Die durch die Rundschlitze 59 geführten Enden 60 der Haltezapfen 58 sind mit einer Dicke ausgeführt, die es erlaubt, den Verbindungsarm 27 des zweiten Schienenkörpers 26 entgegen der Höhenrichtung 7 formschlüssig an den Haltezapfen 58 zu halten. Zum Einführen der Haltezapfen 58 in die Rundschlitze 59 sind entsprechende Einführöffnungen 61 ausgebildet. Auf diese Weise ist ein Drehlager gebildet, welches die zweiten alternative Vorrichtung 3" von der Querstange 49 bezüglich Drehmomente entkoppelt.

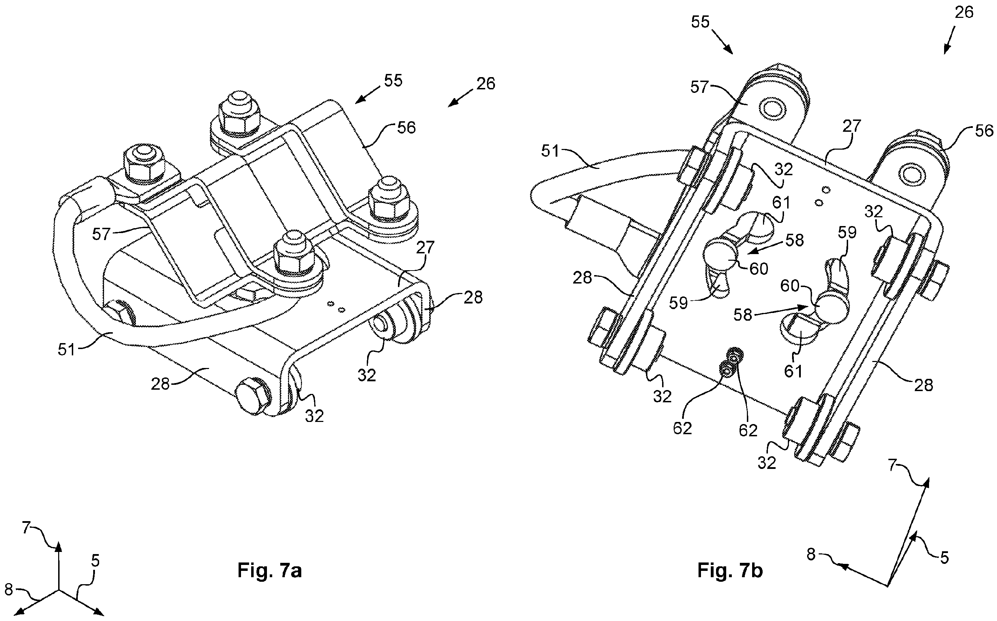

Über die in der Fig. 7b an der in der Höhenrichtung 7 gesehenen Unterseite des Verbindungsarmes 27 zu sehenden Schrauben 62 ist die Schleppkette 54 an den zweiten Schienenkörper 26 angebunden.

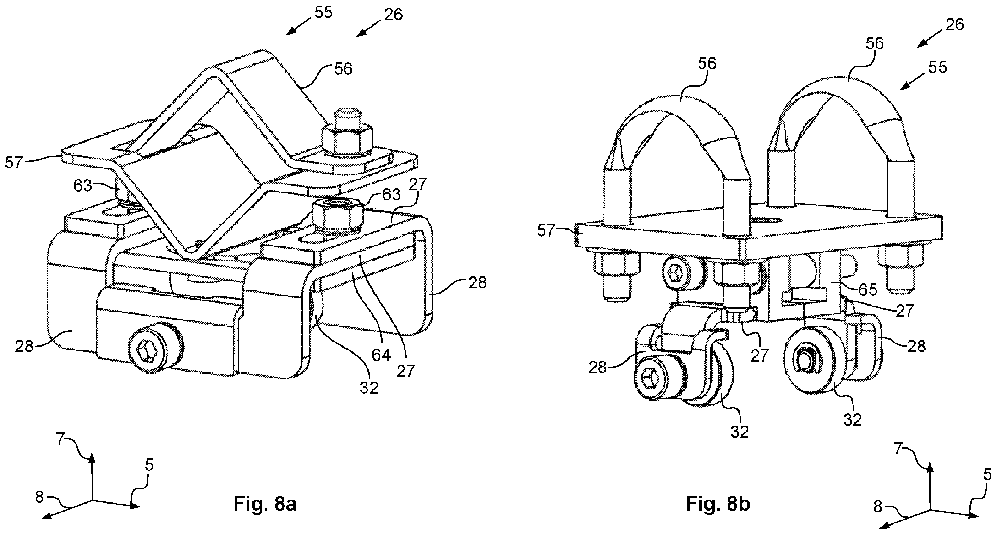

In Fig. 8a ist ein alternativer zweiter Schienenkörper 26 gezeigt.

Der zweite Schienenkörper 26 ist mit lediglich zwei Wälzelementen 32 ausgestattet, die in der Querrichtung 8 gesehen gegenüberliegend zueinander angeordnet ist. Die die Wälzelemente 32 haltenden Haltearme 28 sind dabei an je einem Verbindungsarm 27 gehalten, so dass sich zwei nicht weiter referenzierte Winkelprofile ergeben, die an den Haltearmen 27 über Schrauben 63 miteinander verbunden sind. Ebenfalls mit über die Schrauben 63 angeschraubt ist in der Höhenrichtung 7 gesehen unterhalb der beiden Verbindungsarme 27 eine Platte 64, an der die Schelle 55 wie in den Fig. 7a und 7b gehalten ist. Auf eine ausführliche Darstellung wird daher nachstehend verzichtet.

In Fig. 8b ist ein weiterer alternativer zweiter Schienenkörper 26 gezeigt.

In dem weiteren alternativen Schienenkörper sind die pberen Schellenteile 56 als Bügel und das untere Schellenteil 57 als Platte ausgeführt, an der die Bügel angeschraubt sind. Unterhalb der Platte ist ein Block 65 angeschraubt, an dem wiederum in der Querrichtung 8 links und rechts ein Verbindungsarm 27 daran gehaltenem Haltearm 28 gehalten ist. An jedem Haltearm 28 ist je ein Wälzelement 32 gehalten.

Beide alternativen Schienenkörper 26 der Fig. 8a und 8b sind deutlich leichter aufgebaut.

Die in den Fig. 2 bis 8b beschriebenen Vorrichtungen 3', 3" können in Fig. 1 an geeigneten Stellen verbaut werden. Dabei kann die erste alternative Vorrichtung 3' um das Drehlager der zweiten alternativen Vorrichtung 3" erweitert werden, während die zweite alternative Vorrichtung 3" um das Rückstellelement 41 erweitert werden kann.

## Patentansprüche

1. Vorrichtung (3', 3") zum Tragen eines in einer Längsrichtung (5) verlaufenden Fahrdrahtes (4) zur elektrischen Energieversorgung eines Schienenfahrzeuges an einem in einer rechtwinklig zur Längsrichtung (5) verlaufenden Höhenrichtung (7) gesehen oberhalb des Fahrdrahtes (4) angeordneten Tragkörper (11), umfassend eine eine thermische Expansionsbewegung wenigstens des Fahrdrahtes (4) führende Führungsschiene (23) mit einem ersten Schienenkörper (25), an dem der Fahrdraht (4) ortsfest gehalten ist und einem zweiten Schienenkörper (26), der am Tragkörper (11) ortsfest gehalten ist, wobei der erste Schienenkörper (25) und der zweite Schienenkörper (26) gegeneinander über Wälzelemente (32) geführt sind, wobei die Wälzelemente (32) quer zur Längsrichtung (5) und quer zur Höhenrichtung (7) ausgerichtete Rollen (32) sind, **dadurch gekennzeichnet, dass** einer der Schienenkörper (25, 26) in Längsrichtung (5) gesehenen einen u-profilförmigen Querschnitt mit einem Verbindungsarm (27) und zwei voneinander beabstandete und vom Verbindungsarm (27) abragende Haltearme (28) umfasst, an dem die Rollen (32) gehalten sind.

2. Vorrichtung (3', 3") nach Anspruch 1, wobei die Rollen (32) einen Rollendurchmesser (36) besitzen und in Längsrichtung (5) gesehen mit wenigstens einem, vorzugsweise wenigstens zwei Rollendurchmessern (36) beabstandet voneinander angeordnet sind.

3. Vorrichtung (3', 3") nach einem der vorstehenden Ansprüche, wobei die Wälzelemente (32) achsensymmetrisch zur Längsrichtung (5) angeordnet sind.

4. Vorrichtung (3', 3") nach einem der vorstehenden Ansprüche, wobei der erste Schienenkörper (25) oder der zweite Schienenkörper (26) in einem in der Längsrichtung (5) gesehenen Querschnitt die Wälzelemente (32) in Form eines U umgreifend ausgebildet ist.

5. Vorrichtung (3', 3") nach Anspruch 6, wobei das U in der Höhenrichtung gesehen einen ersten Schenkel (27) und einen dem ersten Schenkel gegenüberliegenden zweiten Schenkel (29) besitzt, und wobei die Wälzelemente (32) einen Durchmesser zwischen 90% und 99% eines Abstandes (38) der beiden Schenkel (27, 29) besitzt.

6. Vorrichtung (3', 3") nach einem der vorstehenden Ansprüche, umfassend ein am ersten und/oder zweiten Schienenkörper (25, 26) angeordnetes Drehlager (58, 59) zur Drehmomentenentkopplung zwischen dem Fahrdraht (4) und dem Tragkörper (11).

7. Vorrichtung (3', 3") nach Anspruch 6, wobei das Drehlager (58, 59) zwei punktsymmetrisch zueinander angeordnete und in der Höhenrichtung (7) durch den ersten oder zweiten Schienenkörper (25, 26) geführte Schlitze (59) umfasst, durch die jeweils in der Höhenrichtung (7) ein ortsfest zum Tragkörper (11) gehaltener Haltezapfen (58) mit einem verdickten Ende (60) geführt ist.

8. Vorrichtung (3', 3") nach einem der vorstehenden Ansprüche, umfassend ein am ersten und/oder zweiten Schienenkörper (25, 26) angeordnetes und gegen die Höhenrichtung (7) vorgespanntes Rückstellelement (42) zum Dämpfen von in der Höhenrichtung (7) in den Fahrdraht (4) eingetragene Kräfte.

## Claims

1. Device (3', 3") for carrying a contact wire (4) extending in a longitudinal direction (5) for the electrical energy supply of a rail vehicle on a support body (11) arranged, as seen in a height direction (7) extending at right angles to the longitudinal direction (5), above the contact wire (4), comprising a guide rail (23) guiding a thermal expansion movement at least of the contact wire (4) with a first rail body (25), on which the contact wire (4) is held in a fixed position, and a second rail body (26), which is held in a fixed position on the support body (11), wherein the first rail body (25) and the second rail body (26) are guided relative to one another via rolling elements (32), wherein the rolling elements (32) are rollers (32) oriented transversely to the longitudinal direction (5) and transversely to the height direction (7), **characterized in that** one of the rail bodies (25, 26), as seen in the longitudinal direction (5), comprises a u-profile-shaped cross section with a connecting arm (27) and two holding arms (28) spaced apart from one another and projecting from the connecting arm (27), on which the rollers (32) are held.

2. Device (3', 3") according to claim 1, wherein the rollers (32) have a roller diameter (36) and, as seen in the longitudinal direction (5), are arranged spaced apart from one another by at least one, preferably at least two roller diameters (36).

3. Device (3', 3") according to one of the preceding claims, wherein the rolling elements (32) are arranged axis-symmetrically with respect to the longitudinal direction (5).

4. Device (3', 3") according to one of the preceding claims, wherein the first rail body (25) or the second rail body (26), in a cross section seen in the longitudinal direction (5), is formed so as to embrace the rolling elements (32) in the shape of a U.

5. Device (3', 3") according to claim 6, wherein the U, as seen in the height direction, has a first leg (27) and a second leg (29) opposite the first leg, and wherein the rolling elements (32) have a diameter between 90% and 99% of a distance (38) between the two legs (27, 29).

6. Device (3', 3") according to one of the preceding claims, comprising a rotary bearing (58, 59) arranged on the first and/or second rail body (25, 26) for torque decoupling between the contact wire (4) and the support body (11).

7. Device (3', 3") according to claim 6, wherein the rotary bearing (58, 59) comprises two slots (59) arranged point-symmetrically to one another and guided in the height direction (7) through the first or second rail body (25, 26), through which respectively in the height direction (7) a holding pin (58) held fixed relative to the support body (11) with a thickened end (60) is guided.

8. Device (3', 3") according to one of the preceding claims, comprising a restoring element (42) arranged on the first and/or second rail body (25, 26) and preloaded against the height direction (7) for damping forces introduced into the contact wire (4) in the height direction (7).

## Revendications

1. Dispositif (3', 3") destiné à porter un fil de contact (4) s'étendant dans une direction longitudinale (5) pour l'alimentation électrique d'un véhicule ferroviaire sur un corps porteur (11) disposé, vu dans une direction verticale (7) s'étendant perpendiculairement à la direction longitudinale (5), au-dessus du fil de contact (4), comprenant un rail de guidage (23) guidant un mouvement d'expansion thermique au moins du fil de contact (4) avec un premier corps de rail (25), sur lequel le fil de contact (4) est maintenu en position fixe, et un second corps de rail (26), qui est maintenu en position fixe sur le corps porteur (11), le premier corps de rail (25) et le second corps de rail (26) étant guidés l'un par rapport à l'autre par des éléments roulants (32), les éléments roulants (32) étant des rouleaux (32) orientés transversalement à la direction longitudinale (5) et transversalement à la direction verticale (7), **caractérisé en ce que** l'un des corps de rail (25, 26), vu dans la direction longitudinale (5), comprend une section transversale en forme de profilé en U avec un bras de liaison (27) et deux bras de retenue (28) espacés l'un de l'autre et faisant saillie à partir du bras de liaison (27), sur lesquels les rouleaux (32) sont maintenus.

2. Dispositif (3', 3") selon la revendication 1, les rouleaux (32) ayant un diamètre de rouleau (36) et étant disposés, vus dans la direction longitudinale (5), à une distance l'un de l'autre d'au moins un, de préférence d'au moins deux diamètres de rouleau (36).

3. Dispositif (3', 3") selon l'une des revendications précédentes, les éléments roulants (32) étant disposés de manière axisymétrique par rapport à la direction longitudinale (5).

4. Dispositif (3', 3") selon l'une des revendications précédentes, le premier corps de rail (25) ou le second corps de rail (26), dans une section transversale vue dans la direction longitudinale (5), étant formé de manière à entourer les éléments roulants (32) en forme de U.

5. Dispositif (3', 3") selon la revendication 6, le U présentant, vu dans la direction verticale, un premier bras (27) et un second bras (29) opposé au premier bras, et les éléments roulants (32) ayant un diamètre compris entre 90 % et 99 % d'une distance (38) entre les deux bras (27, 29).

6. Dispositif (3', 3") selon l'une des revendications précédentes, comprenant un palier rotatif (58, 59) disposé sur le premier et/ou le second corps de rail (25, 26) pour le découplage de couple entre le fil de contact (4) et le corps porteur (11).

7. Dispositif (3', 3") selon la revendication 6, le palier rotatif (58, 59) comprenant deux fentes (59) disposées de manière ponctuellement symétrique l'une par rapport à l'autre et guidées dans la direction verticale (7) à travers le premier ou le second corps de rail (25, 26), à travers lesquelles, respectivement dans la direction verticale (7), est guidée une goupille de maintien (58) maintenue fixe par rapport au corps porteur (11) et présentant une extrémité épaissie (60).

8. Dispositif (3', 3") selon l'une des revendications précédentes, comprenant un élément de rappel (42) disposé sur le premier et/ou le second corps de rail (25, 26) et précontraint contre la direction verticale (7) pour amortir les forces introduites dans le fil de contact (4) dans la direction verticale (7).
